# EUROPEAN PATENT APPLICATION

(11) **EP 2 424 161 A2**
(43) Date of publication of application: **29.02.2012**
(21) Application number: 11176789.3
(22) Date of filing: 08.08.2011
(51) Int. Cl.: H04L 12/18

(54) **Display control apparatus and control method executed by the display control apparatus**

(30) Priority: 26.08.2010 JP 2010189454
(71) Applicant: Canon Kabushiki Kaisha, Tokyo 146-8501 (JP)
(72) Inventor: Kurosawa, Takahiro, Ohta-ku, Tokyo (JP)
(74) Representative: Garner, Jonathan Charles Stapleton

(57) **Abstract**

In a display control apparatus (101), an input means inputs minute data, an acquisition means acquires identification information for conference data, a recording control means records the input minute data and the acquired identification information for the conference data in association with each other, and a display control means displays the input minute data and the conference data identification information according to the association between the minute data and the identification information.

## Description

### BACKGROUND OF THE INVENTION

### Field of the Invention

The present invention relates to a display control apparatus and a control method executed by the display control apparatus.

### Description of the Related Art

A method in a conference system for mutually associating documents to be referred to in a conference has been used. For example, Japanese Patent Application Laid-Open No. 2002-132837 discusses a method for storing a conference minute, which includes a hyperlink that enables one-click reading of all conference documents necessary for a conference, on a server that accepts an access from a terminal used by a conference participant (member) and a terminal used for a presentation.

In addition, Japanese Patent Application Laid-Open No. 2005-130257 discusses a method for inserting a moving image of a conference to a minute, which members of the conference can view after the conference ends. In addition, a web page having a uniform resource locator (URL) "http://www.microsoft.com/japan/office/2010/tips/026.mspx" discusses a method for automatically generating a link to a document if a text is input while referring to the document after calling a function "OneNote^{®}". However, with the above-described conventional methods, a person who views the minute may not fully understand the content of the conference.

For example, if a comment made when a plurality of pieces of conference data has been mutually compared in the conference is linked with one piece of conference data only, the person viewing the minute of the conference may not sufficiently understand the content of the conference.

In addition, for example, if conference data generated by an application which cannot be reproduced in a reference environment of the minute is referred to, the person viewing the minute of the conference may not sufficiently understand the content of the conference.

Furthermore, if a projector that projects conference data is changed or if a document photographed by a digital camera is referred to during the conference, the link timing may be shifted. As a result, the reproducibility of the document may degrade. In this case, the person viewing the minute of the conference may not sufficiently understand the content of the conference.

### SUMMARY OF THE INVENTION

The present invention is directed to a method for enabling a person viewing a minute of a conference to more correctly understand the content of the conference.

The present invention in its first aspect provides a display control apparatus as specified in claims 1 to 6.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the present invention.

Fig. 1 is a block diagram illustrating an exemplary configuration of a conference system.

Fig. 2 illustrates an exemplary hardware configuration of a conference apparatus.

Fig. 3 illustrates an exemplary configuration of a program according to a first exemplary embodiment of the present invention.

Fig. 4 is a flow chart illustrating exemplary processing executed by a conference management unit of the conference apparatus.

Fig. 5 is a flow chart illustrating exemplary processing executed by a minute recording unit of the conference apparatus.

Fig. 6 is a flow chart illustrating exemplary processing executed by a reference status identification unit of the conference apparatus.

Fig. 7 is a flow chart illustrating exemplary processing executed by a reference status recording unit of the conference apparatus.

Fig. 8 illustrates an example of conference session information.

Fig. 9 illustrates an example of minute data.

Fig. 10 illustrates an example of a reference state.

Fig. 11 illustrates another exemplary configuration of the conference system.

Fig. 12 illustrates an example of a minute.

Fig. 13 illustrates an exemplary configuration of a program according to a second exemplary embodiment.

Fig. 14 is a flow chart illustrating exemplary processing executed by a moving image storage unit (video recording unit) according to the second exemplary embodiment.

### DESCRIPTION OF THE EMBODIMENTS

Various exemplary embodiments, features, and aspects of the invention will be described in detail below with reference to the drawings.

A configuration illustrated in the following exemplary embodiment of the present invention is a mere example. In other words, the present invention is not limited to the following configuration described with reference to the attached drawings.

A conference apparatus according to a first exemplary embodiment of the present invention is a recording apparatus configured to store conference data to be displayed in a conference. In addition, the conference apparatus is configured to mutually associate minute data of a conference (for example, the content of a comment) and identification information and a display state of the conference data (for example, the layout and the focus state) and records the mutually associated minute data, the identification information, and the display state information as minute information (a minute).

The layout information for the conference data includes a position of display of each piece of conference data on a screen, a display order-relationship (a superposing relationship) among the plurality of pieces of conference data, and a setting, such as a multiscreen display setting and a tile display setting. In the present exemplary embodiment, minute information is managed in the unit of a conference session.

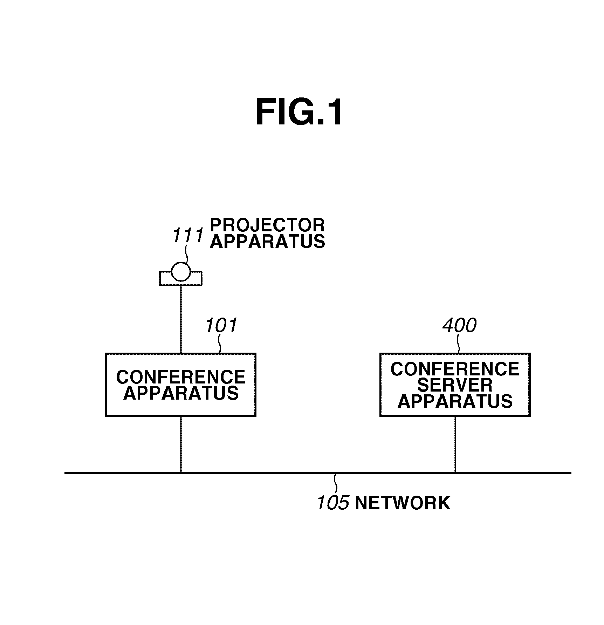

Fig. 1 illustrates an exemplary system configuration of the present exemplary embodiment. In the example illustrated in Fig. 1, a conference apparatus 101 and a projector apparatus 111 are connected with each other. In addition, the conference apparatus 101 and a conference server apparatus 400 are connected via a network 105.

An intranet operating within a corporation or an organization or the Internet, which substantially extends around the world, can be used as the network 105. Furthermore, the network 105 can be either wired or wireless. More specifically, a wirelesscommunication method, such as wireless fidelity (Wi-Fi) (Institute of Electrical and Electronic Engineers (IEEE) 802.11 series) or Bluetooth^{®}, and a wired communication method, such as Power Line Communications or IEEE 802.3 (Ethernet) can be used as the network 105.

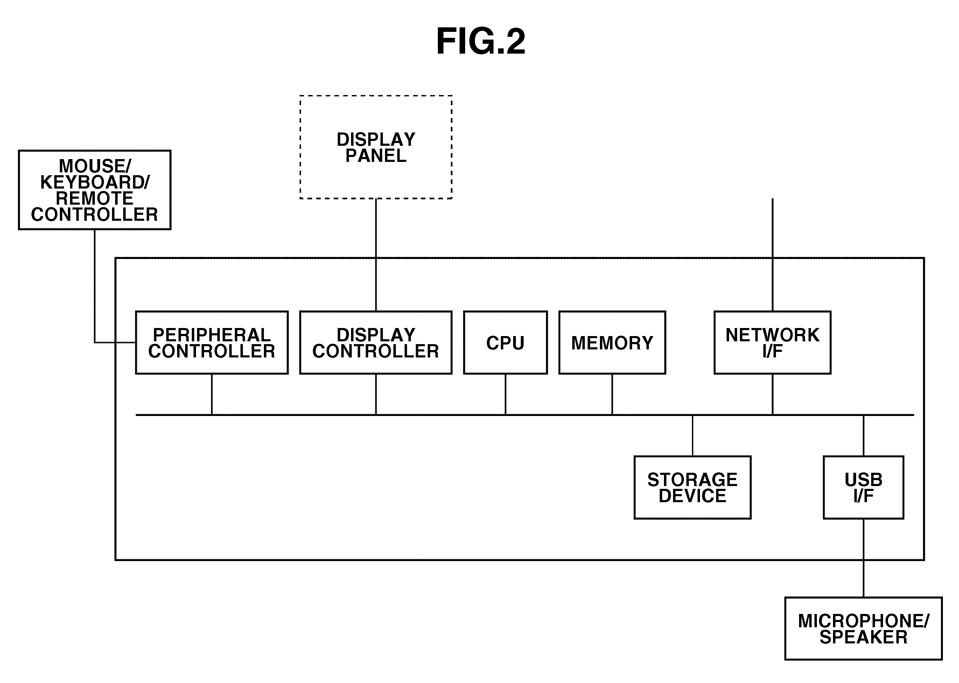

Fig. 2 illustrates an exemplary hardware configuration of the conference apparatus 101.

The conference apparatus 101 includes a central processing unit (CPU), a memory, a network interface (I/F), a display controller, a peripheral controller, a memory, and a universal serial bus (USB) controller.

The CPU executes various processing by executing a program recorded on the memory. The memory stores various programs executed by the CPU and processing data. The network I/F is an interface for connecting the conference apparatus 101 with other apparatuses.

The display controller is the controller for reproducing and displaying a result of processing by the CPU and video data on a display panel. The peripheral controller is a controller configured to receive a user input executed via a mouse, a keyboard, or a remote controller.

A storage device is an auxiliary device for the memory and stores various types of data used for the conference. In addition, the USB controller is a controller connected with a microphone and speakers and is configured to acquire and output audio data. The hardware configuration of the conference server apparatus 400 is similar to the configuration of the conference apparatus 101 described above.

To the conference apparatus 101 according to the present exemplary embodiment, a conference control request is input, which is output by a user operation of a mouse, a keyboard, or a remote controller connected via the peripheral controller, or output from a terminal apparatus connected via the network 105. In the present exemplary embodiment, the user operation and the conference control request include a minute recording operation, a minute reference operation, a document reference operation, and a conference ending operation.

If a minute recording operation is input, the conference apparatus 101 according to the present exemplary embodiment adds minute data, such as a content of a comment, to minute information (i.e., the minute). In addition, if a minute reference operation is input, the conference apparatus 101 displays minute information designated by the minute reference operation, on the display panel or on an external display apparatus.

Furthermore, if a document reference operation is input, the conference apparatus 101 projects conference data designated by the document reference operation by using the projector apparatus 111. On the other hand, if a conference ending operation is input, the conference apparatus 101 ends a session of the conference designated by the conference ending operation.

For the memory and the storage device, an hard disk drive (HDD) and a non-volatile memory, such as a flash memory, can be used in addition to a high-speed random access memory (RAM). Furthermore, a removable storage device can be used.

For the network I/F, a wired I/F, such as a LAN (IEEE802.3), can be used as well as a wireless interface, such as a wireless LAN (WLAN) (IEEE802.11 series). In addition, both a wired network I/F and a wireless network I/F can be provided.

In the present exemplary embodiment, the peripheral controller is connected to the keyboard, the mouse, and the remote controller. However, alternatively, the peripheral controller can be connected to a touch sensor, a light-emitting diode (LED) controller, or an external sensor input/output (I/O) controller.

Furthermore, in the present exemplary embodiment, audio information I/O devices, such as a microphone and a speaker, are connected to the USB controller as illustrated in Fig. 2. However, alternatively, an I/O controller, which is dedicated to inputting and outputting audio information, can be used to input and output audio data. In addition, a camera can be connected to the USB controller.

The display controller can include a connection I/F for connecting to an external display apparatus, such as a television apparatus or a projector apparatus, in addition to a function for reproducing and displaying data on a dedicated display panel. If a network projector apparatus is used as a primary display apparatus, the display controller itself is not necessary.

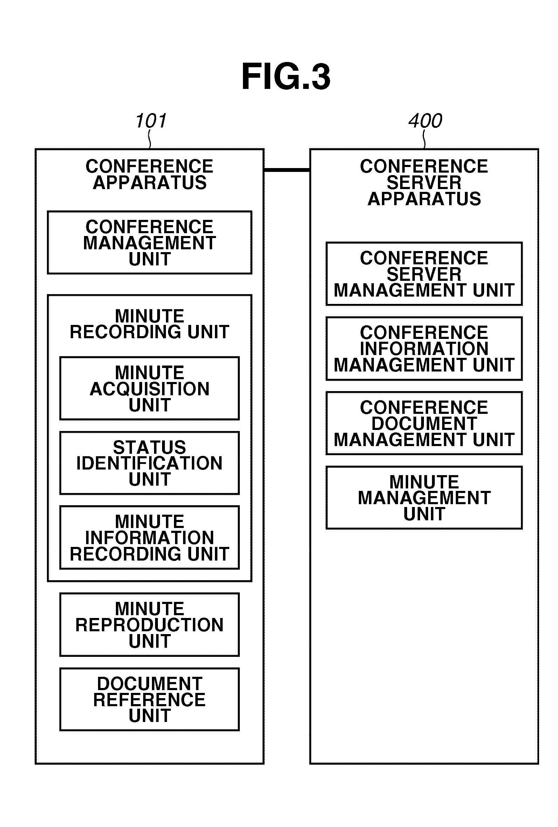

Fig. 3 illustrates an exemplary program configuration of the conference apparatus 101 and the conference server apparatus 400 according to the present exemplary embodiment. The conference apparatus 101 according to the present exemplary embodiment has a function of a recording apparatus configured to store conference data to be displayed in a conference. In addition, the conference apparatus 101 according to the present exemplary embodiment has a function of a display control apparatus configured to display conference data in a conference.

Referring to Fig. 3, the conference apparatus 101 includes a conference management unit, a minute recording unit, a minute reproduction unit, and a document reference unit. The minute recording unit of the conference apparatus 101 includes a minute acquisition unit, a status identification unit, and a minute information recording unit.

The conference server apparatus 400 includes a conference server management unit, a conference information management unit, a conference document management unit, and a minute management unit. The conference management unit executes controls of each unit of the conference apparatus 101 and executes data communication with the conference server apparatus 400 according to a user operation and a conference control request.

In the present exemplary embodiment, the user operation and the conference control request include a minute recording operation, a minute reference operation, a document reference operation, and a conference ending operation.

If a minute reference operation is input, the minute recording unit acquires minute data, such as a content of a comment. In addition, after acquiring the minute data, the minute recording unit acquires identification information for conference data. To paraphrase this, the minute recording unit acquires identification information for the conference data displayed when the minute data is input.

As will be described in detail below, the minute recording unit can acquire a status of display of a page number of the currently displayed conference data together with identification information according to the type of the conference data. In addition, for example, if a plurality of pieces of conference data has been displayed when minute data is input, the minute recording unit can acquire a display layout of the plurality of conference data and the display state of the display order-relationship of the plurality of conference data together with the identification information.

Furthermore, the minute recording unit mutually associates the minute data and the identification information for the conference data and information about the display state of the conference data, and records the mutually associated data and information as minute information (i.e., the minute). In the present exemplary embodiment, as the display state of the conference data, the display layout of the conference data and the focusing state of the conference data are identified. However, the display state of the conference data is not limited to the above-described example.

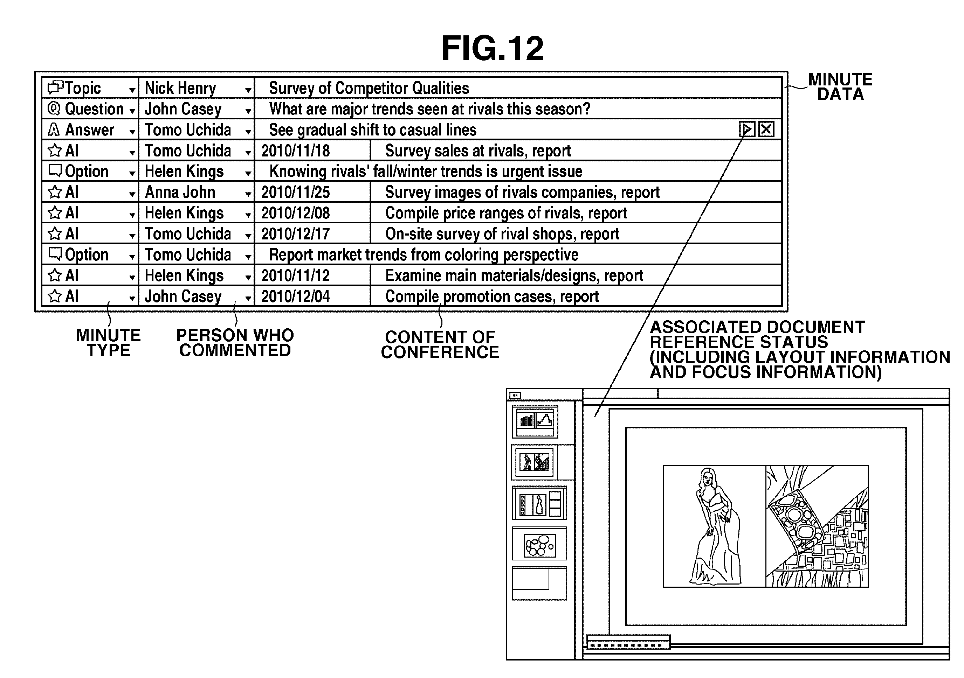

The minute reproduction unit displays the minute information (the minute) on the display panel or on an external display apparatus when a minute reference operation is input. Fig. 12 illustrates an example of a minute displayed when a minute reference operation is input.

In the minute according to the present exemplary embodiment, a plurality of rows including various items, such as a minute item type (a question, an answer to a question, a conclusion, an action item, and a decision), a speaker, and a minute item content (a content of a comment), is displayed. Furthermore, in the minute according to the present exemplary embodiment, if one of the plurality of rows is selected, an icon for displaying the conference data that has been referred to at the timing of input of minute data corresponding to the selected row (i.e., a reference icon) is displayed.

When the icon is operated, the conference data that has been referred to at the timing of input of the corresponding minute data is displayed according to the layout and the focusing state applied when the minute data is input.

In the present exemplary embodiment, the conference data is displayed when the reference icon is operated. However, alternatively, the conference data can be displayed according to a designation of minute data. Further alternatively, a plurality of pieces of minute data and conference data associated with the plurality of pieces of minute data can be displayed as a list.

The document reference unit projects the conference data to be displayed according to the document reference operation, of a plurality of pieces of conference data, by using the projector apparatus 111.

In addition, the conference server management unit of the conference server apparatus 400 controls another program installed to the conference server apparatus 400 according to various requests from the conference apparatus 101, which is a client. The conference information management unit executes a reservation, a change, a deletion, and a reference of a conference.

The conference document management unit executes a registration, a change, a deletion, and a reference of a conference document. The minute management unit executes a registration, a deletion, and a reference of a minute (minute information).

The program is stored on the memory and the storage device of each apparatus and is executed by a CPU of each apparatus. In addition, where necessary, the program is caused to function by controlling the network I/F, the USB I/F, or various controllers described above.

In the present exemplary embodiment, the above-described program is executed according to a user operation input via the mouse, the keyboard, or the remote controller or according to a user operation executed on a terminal apparatus connected via the network 105. However, the present exemplary embodiment is not limited to this. More specifically, the program can operate according to an audio command input via the microphone or according to a count of a timer built in to the CPU of the apparatus.

Now, an exemplary operation of each program will be described in detail below with reference to flow charts of the attached drawings. Setting information, which is loaded when each program is started, is loaded from a non-volatile storage device (memory) or from a network when each apparatus is powered on and is stored on the memory or the storage device of each apparatus. The setting value is a factory default value or a user designation value set by the user using another tool.

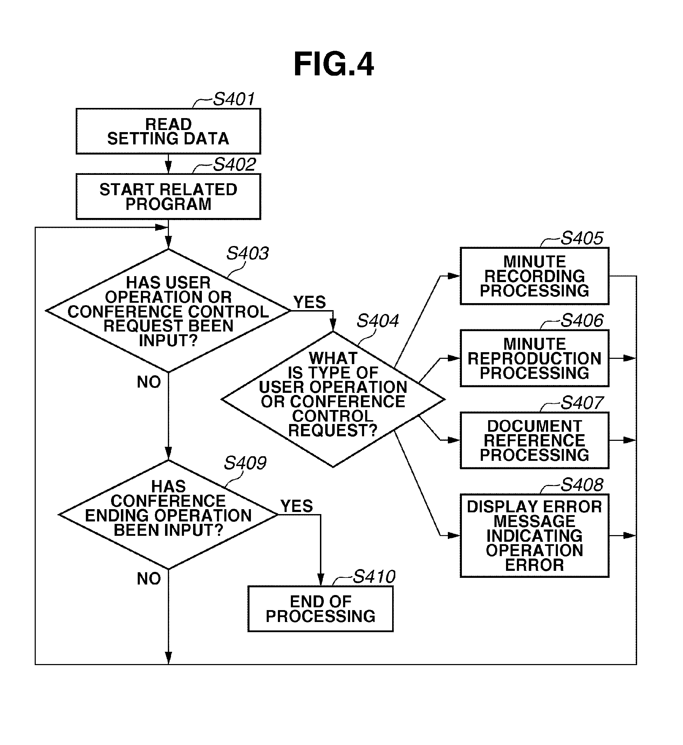

Fig. 4 is a flow chart illustrating exemplary processing executed by the conference management unit of the conference apparatus 101. The conference management unit controls the components of the conference apparatus 101 according to a conference control request, which is input by a user operation or received via the network.

Referring to Fig. 4, in step S401, the conference management unit reads setting data. In step S402, the conference management unit acquires conference session information from the conference server apparatus 400. The conference session information according to the present exemplary embodiment includes the following information.

More specifically, the conference session information is constituted by a conference identifier, a date and time of a conference, a conference time, the place of the conference, the conference member, a conference name, a goal (purpose) of the conference, an agenda (list of subjects), a reference document list, a list of devices to be utilized, and conference group information.

The conference group information is information for identifying a series of conferences including a regular conference and an irregular conference.

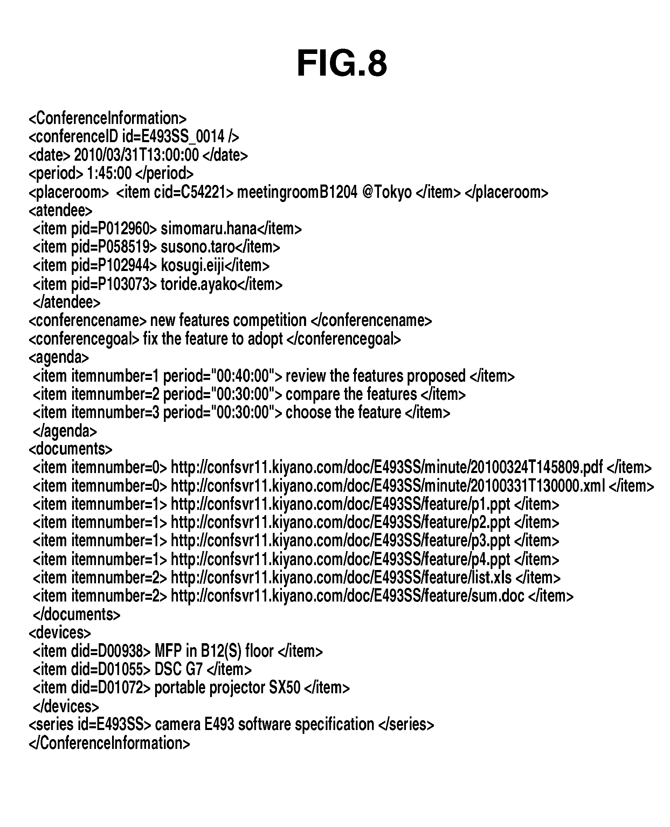

The list of devices to be utilized, which is included in the conference session information, can include lighting apparatuses and air conditioners in addition to a projector, an electronic whiteboard, and a multifunction printer. Control of the above-described devices is performed during the conference where necessary. Fig. 8 illustrates an example of the conference session information.

In step S402, the conference management unit activates the minute recording unit, the minute reproduction unit, and the document reference unit according to the conference session information. In step S403, the conference management unit determines whether a user operation or a conference control request other than a conference ending operation has been input.

If it is determined that a user operation or a conference control request for instructing an operation other than a conference ending operation has been input (Yes in step S403), then the processing advances to step 5404. In step S404, the conference management unit analyzes a content of the user operation and the conference control request.

If it is determined in step S404 that a user operation or a conference control request is an instruction for a minute recording operation, the processing advances to step S405. On the other hand, if it is determined in step S404 that a user operation or a conference control request is an instruction for a minute reference operation, the processing advances to step S406. If it is determined in step S404 that a user operation or a conference control request is an instruction for a document reference operation, the processing advances to step S407. If it is determined in step S404 that a user operation or a conference control request is an instruction for an operation other than the operations described above, the processing advances to step S408.

In step S405, the conference management unit requests the minute recording processing to the minute recording unit. The minute recording unit executes the minute recording processing according to the request. To paraphrase this, the minute acquisition unit of the minute recording unit acquires minute data, such as a content of a comment, which is instructed by the user operation and the conference control request.

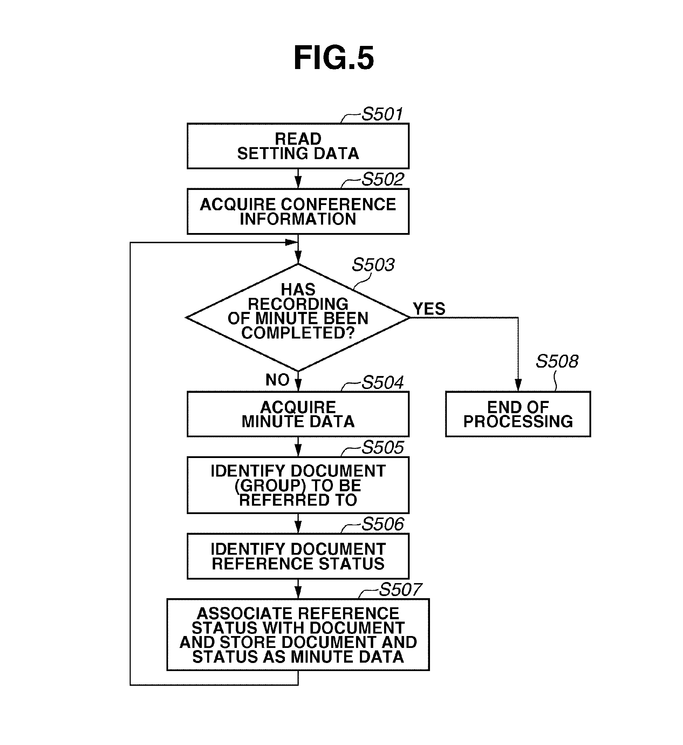

The status identification unit of the minute recording unit acquires the identification information and the display state of the conference data according to the acquired minute data. In addition, the minute information recording unit of the minute recording unit mutually associates and records the minute data acquired by the minute acquisition unit and the identification information and the display state of the conference data acquired by the status identification unit. The minute recording processing will be described in detail below with reference to Fig. 5.

In step S406, the conference management unit requests the minute reproduction processing to the minute reproduction unit. The minute reproduction unit executes minute reproduction processing for displaying minute information (the minute) on the display panel or on an external display apparatus according to the request.

In step S407, the conference management unit requests the document reference processing to the document reference unit. In response to the request, the document reference unit projects the conference data instructed by the user operation and the conference control request, of a plurality of pieces of conference data, by using the projector apparatus 111.

In step S408, the conference management unit displays an error message that indicates an operation error on the display panel of the conference apparatus. In step S409, the conference management unit determines whether a conference ending operation has been input. If a conference ending operation has been input (Yes in step S409), then the processing advances to step S410. In step S410, the processing ends.

Fig. 5 is a flow chart illustrating exemplary processing executed by the minute recording unit of the conference apparatus 101. The processing illustrated in Fig. 5 corresponds to the processing in step S405 illustrated in Fig. 4. More specifically, the processing illustrated in Fig. 5 is executed according to a user operation or a conference control request (a minute recording operation) input by a terminal apparatus, which is connected via the network 105.

Referring to Fig. 5, in step S501, the minute acquisition unit included in the minute recording unit reads a setting of a conference session currently in process. In step S502, the minute acquisition unit acquires conference session information corresponding to the input minute recording operation.

The conference session information includes various information, such as a conference identifier, a date and time of the conference, a conference time, the place of the conference, the conference member, a conference name, the goal (purpose) of the conference, the agenda, a reference document list, a list of devices to be utilized, and conference group information.

In step S503, the minute acquisition unit of the minute recording unit determines whether the entire minute has been completely recorded according to the input minute recording operation. If it is determined that the entire minute has been completely recorded (Yes in step S503), then the processing advances to step S508. In step S508, the processing ends.

On the other hand, if it is determined that the minute has not been completely recorded yet (No in step S503), then the processing advances to step S504. In step S504, the minute acquisition unit of the minute recording unit acquires the minute data included in the input minute recording operation. In other words, the minute acquisition unit inputs the minute data of the conference.

In the present exemplary embodiment, it is supposed that text data input by the user using the keyboard is used as the minute data. However, the present exemplary embodiment is not limited to this. More specifically, information about a stroke on the electronic whiteboard or drawing information can be used as the minute data.

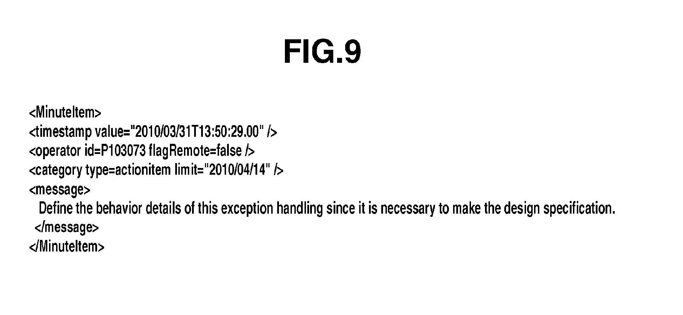

In addition, attribute information, such as a minute item type (a question, an answer to a question, a conclusion, an action item, and a decision), a speaker (and whether a speaker comments from a remote place), and a time stamp, is assigned to the minute data. Fig. 9 illustrates an example of the minute data.

In step S505, the status identification unit of the minute recording unit identifies the conference data that has been referred to (displayed). For example, the conference data includes presentation data and table (spreadsheet) data. The conference data to be identified may be formed as a single piece of data or as a plurality of pieces of data.

In step S506, the status identification unit of the minute recording unit acquires the identification information and the display state of the conference data identified in step S505.

The display state of the conference data that is currently displayed includes the layout and the focusing state of the conference data. In the present exemplary embodiment, the layout includes the position of display of each piece of conference data on the screen, the display order-relationship (the superposing relationship) of the plurality of pieces of conference data, and a setting, such as a multiscreen display setting or a tile display setting.

Moreover, in the present exemplary embodiment, the focusing includes focusing among documents (hereinafter simply referred to as "inter-document focusing"), which indicates focused conference data among a plurality of conference data (application windows) displayed when minute data is input. In addition, the focusing according to the present exemplary embodiment includes focusing within a document (hereinafter simply referred to as "intra-document focusing"), which indicates a focused region within one piece of conference data.

Information dealt with in the inter-document focusing identifies conference data that is magnified and displayed, among the plurality of conference data. In addition, the information dealt with in the inter-document focusing identifies normally displayed conference data and conference data displayed in a gray-out state, among the plurality of conference data.

On the other hand, in the intra-document focusing, if conference data generated by a spreadsheet application is displayed, a currently operated cell becomes the focused region. Alternatively, in the intra-document focusing, if conference data which has been generated by a presentation application and including a plurality of pages is displayed, a page displayed when minute data is input can be set as the focused region.

In step S507, the minute information recording unit of the minute recording unit mutually associates the minute data acquired by the minute acquisition unit and the identification information and the display state of the conference data acquired by the status identification unit and records the mutually associated data and information as minute information (the minute).

In step S508, the minute information recording unit stores the minute information recorded within the conference apparatus 101 as a database and sets an access right thereto. Alternatively, the conference server apparatus 400 can store the minute information as a database and set an access right thereto.

In this case, the current URL of the conference data is replaced with the URL of the conference data stored on the conference server apparatus 400 to prevent the loss of information about a link to the conference data when the conference is once suspended and then resumed (continued) by a conference apparatus different from the conference apparatus 101.

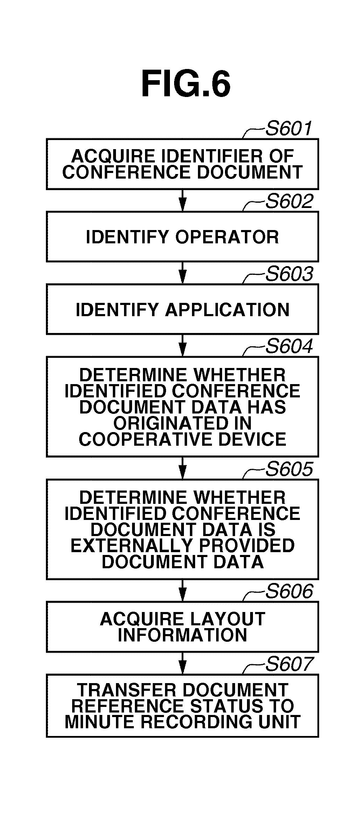

Fig. 6 is a flow chart illustrating exemplary processing executed by the status identification unit included in the minute recording unit of the conference apparatus 101. The processing illustrated in Fig. 6 corresponds to the processing in steps S505 and S506 illustrated in Fig. 5.

Referring to Fig. 6, in step S601, the status identification unit acquires an identifier of one or more pieces of conference data that is currently referred to. The status identification unit according to the present exemplary embodiment acquires a uniform resource identifier (URI) included in the conference session information. In the present exemplary embodiment, it is supposed that before a conference starts, most of pieces of conference data are previously registered as documents to be referred to in the conference. The information is reflected on the list of documents included in the conference session information.

In step S602, the status identification unit identifies an operator of the conference data. In particular, the status identification unit determines whether the person who has input the minute data is identical with the operator of the conference data and sets a flag as a result of the determination.

In step S603, the status identification unit identifies an application corresponding to the conference data. More specifically, in step S603, the status identification unit according to the present exemplary embodiment determines whether the identified application is a designation application or a non-designation application.

The designation application refers to an application which allows the status identification unit to acquire detailed information such as a page to be referred to or an operation cell within the conference data. On the other hand, the non-designation application refers to an application which does not allow the status identification unit to acquire detailed information within the conference data.

In the present exemplary embodiment, the presentation application and the spreadsheet application are the designation applications. On the other hand, a three-dimensional-computer aided design (3D-CAD) application is the non-designation application.

In step S604, the status identification unit determines whether the conference data identified in step S601 is conference data originating in a cooperative device and sets a flag as a result of the determination. In the present exemplary embodiment, the conference data originating in the cooperative device refers to conference data supplied from an apparatus connected to the conference apparatus 101, such as a multifunction peripheral (MFP), or from a digital camera.

If it is determined in step S604 that the conference data identified in step S601 is the conference data originating in the cooperative device, then the status identification unit acquires device information and device operator information about the cooperative device, which is a supply source of the conference data. The information about the cooperative device acquired in step S604 is associated with the conference data originating in the cooperative device and is then recorded as minute information.

In the present exemplary embodiment, if the identified conference data is determined to be the conference data originating in the cooperative device, then a reference icon, which indicates that the identified information is conference data originating in the cooperative device, is displayed in minute information illustrated in Fig. 12. In addition, in reproducing the conference data when the reference icon is operated, the device information and the device operator information about the cooperative device is displayed.

By executing the above-described processing, the present exemplary embodiment enables the person viewing the minute information (the minute) to recognize the device information and the operator of the conference data. Accordingly, the present exemplary embodiment enables the minute viewing person to more correctly recognize and understand the content of the conference.

In step S605, the status identification unit determines whether the conference data identified in step S601 is externally provided document and sets a flag as a result of the determination.

In the present exemplary embodiment, an externally provided document refers to conference data that can be viewed during a conference but cannot be stored as data. In the present exemplary embodiment, if it is determined that the identified conference data is an externally provided document, the status identification unit associates the result of the determination with the minute data and records the information as the minute information.

In the present exemplary embodiment, if it is determined that the identified conference data is an externally provided document, the status identification unit executes control for displaying a reference icon which indicates that the conference data is an externally provided document in the minute information illustrated in Fig. 12. By executing the above-described processing, the viewer of the minute can recognize that specific conference data has been referred to in the conference.

In step S606, the status identification unit identifies the display layout and the focusing state of the conference data identified in step S601. If a plurality of conference data has been referred to (i.e., if a plurality of application windows has been displayed), the status identification unit according to the present exemplary embodiment determines the display position and the superposing state as the display layout.

In addition, the status identification unit according to the present exemplary embodiment identifies the target region (the reference page and the operation cell) in the conference data displayed when the minute data is input as the intra-document focusing. Furthermore, as the inter-document focusing, the status identification unit identifies focused conference data among a plurality of conference data displayed when the minute data is input.

However, alternatively, the status identification unit can acquire either one of the intra-document focus data and the inter-document focusing data. In addition, the status identification unit acquires a thumbnail image of the conference data.

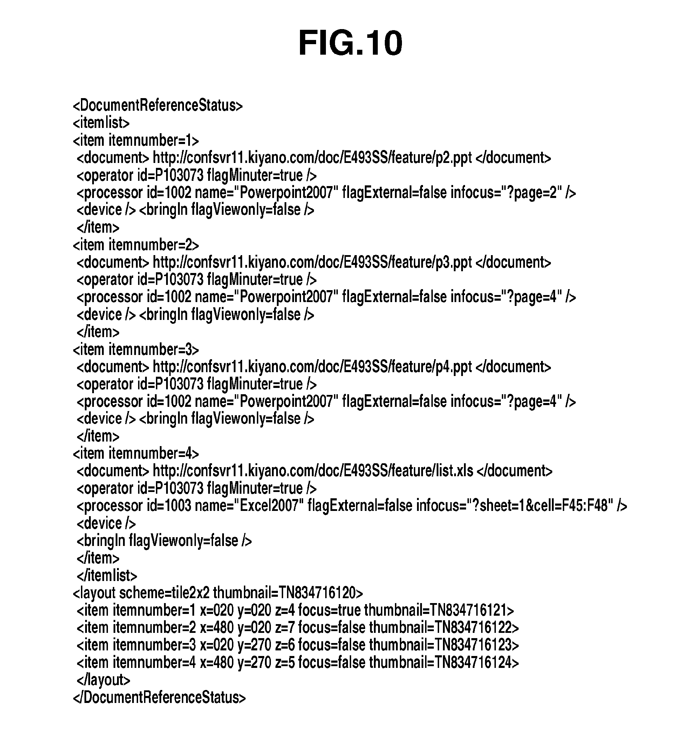

In step S607, the status identification unit transfers the display state acquired in steps S601 through S606 to the minute information recording unit. Then the processing ends. Fig. 10 illustrates an example of the display state transferred in step S607.

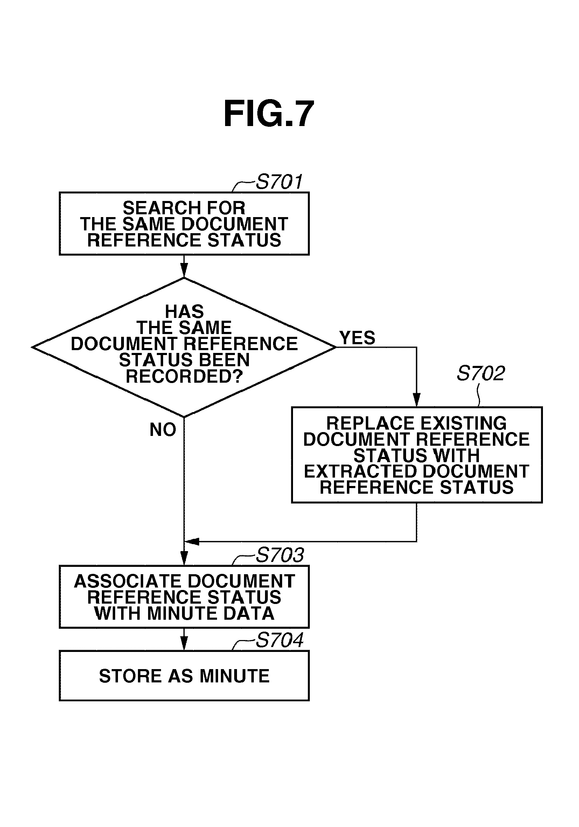

Fig. 7 is a flow chart illustrating exemplary processing executed by the minute recording unit included in the minute information recording unit of the conference apparatus 101. The processing illustrated in Fig. 7 corresponds to the processing in step S507 illustrated in Fig. 5.

Referring to Fig. 7, in step S701, the minute information recording unit determines whether the same display state as the display state transferred in step S607 (Fig. 6) has already been recorded. If it is determined that the same display state as the transferred display state has already been recorded (Yes in step S701), then the processing advances to step S702. On the other hand, if it is determined that the same display state as the transferred display state has not been recorded yet (No in step S701), then the processing advances to step S703.

In step S702, the minute information recording unit replaces the already recorded display state with the display state transferred in step S607. In step S703, the minute information recording unit associates the display state transferred in step S607 or the display state set by the replacement in step S702 with the minute data.

In step S704, the minute information recording unit additionally records the associated data in the minute information (the minute) of the conference, which is identified by the conference session information. However, alternatively, the processing in step S704 can be executed by the conference server apparatus 400.

As described above, in steps S701 and S702, the conference apparatus 101 according to the present exemplary embodiment determines whether the same display state already exists. If it is determined that the same display state already exists, the conference apparatus 101 records a plurality of minute data in one display state. With the above-described configuration, the present exemplary embodiment can effectively reduce the recording capacity required for recording minute information compared with the case in which each piece of minute data is associated with the display state and stored.

As described above, the conference apparatus 101 according to the present exemplary embodiment, in response to input of minute data (a content of a comment, for example), generates minute information (minute) including minute data, and identification information and the display state (the layout or the focusing state) of the conference data referred to when the minute data is input, which are mutually associated.

In addition, when the minute data is selected from the minute information, the conference apparatus 101 displays the conference data by applying the layout and the focusing state which was applied when the selected minute data was input. With the above-described configuration, the present exemplary embodiment allows the viewer of the minute to more correctly understand the content of the conference.

In the present exemplary embodiment, the status information about the conference data includes the layout (the display position of conference data, the superposing state (the display order-relationship) of the plurality of conference data), and a setting, such as a multiscreen display setting and a tile display setting), and the focusing state (the intra-document focusing and the inter-document focusing). However, the present exemplary embodiment is not limited to this.

Furthermore, in the present exemplary embodiment, one conference apparatus 101 is used. However, alternatively, the present invention can be implemented if a plurality of conference apparatuses operates in mutual cooperation.

Moreover, in the present exemplary embodiment, the conference apparatus 101 and the conference server apparatus 400 are connected via the network 105. However, alternatively, the conference apparatus 101 and the conference server apparatus 400 can be implemented on one apparatus.

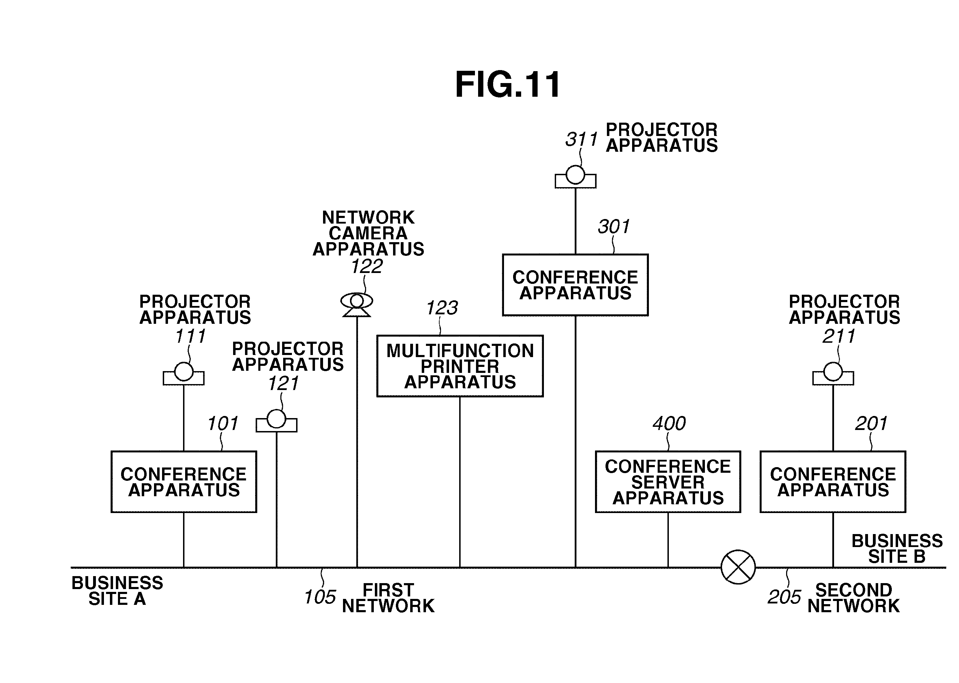

Fig. 11 illustrates another exemplary system configuration different from the configuration illustrated in Fig. 1.

Referring to Fig. 11, a plurality of conference apparatuses 101, 201, and 301 and a plurality of projector apparatuses 111, 211, and 311 are connected via networks 105 and 205. The network 205 is connected to the network 105 via a public network. In the example illustrated in Fig. 11, the minute information illustrated in Fig. 12 can be generated by a cooperative operation of the conference apparatuses 101, 201, and 301.

In the present exemplary embodiment, the conference apparatus transmits the minute information to the conference server apparatus when the conference ends. However, alternatively, the minute information can be transmitted from the conference apparatus to the conference server apparatus every time a piece of minute data is input.

Furthermore, if a minute or conference data of a past conference or a minute or conference data of another conference to which access has been permitted is referred to, the conference data can be associated with the minute as already referred conference data. With the above-described configuration, the present exemplary embodiment can allow a person viewing the minute to more easily search or reuse the minute.

In the above-described exemplary embodiment, the identification information (and the display state) of the conference data displayed when the minute data is input is recorded in association with the minute data. However, the present exemplary embodiment is not limited to this. More specifically, the minute data and the conference data can be mutually associated by the user individually designating the minute data and the conference data.

Further alternatively, the identification information for the conference data being displayed when the user presses an "associate" button (not illustrated) can be associated with the latest input minute data. Yet further alternatively, the identification information for the conference data displayed a predetermined length of time before the timing of input of the minute data can be associated with the minute data.

Moreover, the association between the minute data and the conference data can be changed later. Furthermore, the conference data to be associated with the minute data can be added or deleted later.

In a second exemplary embodiment of the present invention, a screen displaying conference data generated by the non-designation application is recorded as a moving image. In the present exemplary embodiment, the non-designation application refers to an application which does not allow the status identification unit to acquire detailed information, such as a reference page and an operation cell of the conference data.

In the present exemplary embodiment, a 3D-CAD application is the non-designation application and mechanical design information is conference data of the non-designation application.

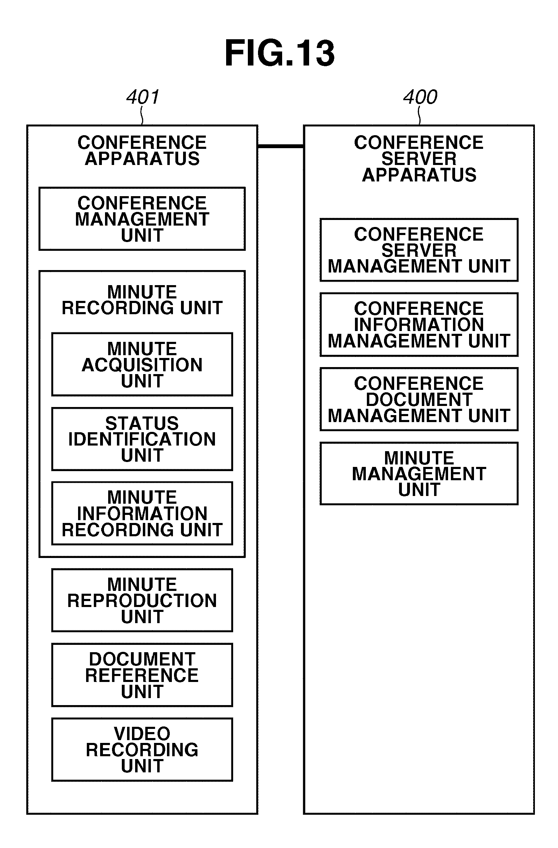

Fig. 13 illustrates an exemplary configuration of a program according to the present exemplary embodiment. Referring to Fig. 13, a conference apparatus 401 according to the present exemplary embodiment has a program configuration similar to the program configuration of the conference apparatus 101 according to the first exemplary embodiment except that a video recording unit is additionally provided.

In the present exemplary embodiment, the conference apparatus 401 executes processing similar to the processing executed by the conference apparatus 101 according to the first exemplary embodiment but the processing in step S402 (Fig. 4) and the processing in step S603 (Fig. 6) according to the present exemplary embodiment are different from those executed by the conference apparatus 101 according to the first exemplary embodiment.

In step S402, the conference management unit of the conference apparatus 401 acquires conference session information and activates the video recording unit in addition to the minute recording unit, the minute reproduction unit, and the document reference unit.

Furthermore, in step S603 (Fig. 6), after identifying the non-designation application, the status identification unit of the conference apparatus 401 requests the video recording unit to transmit moving image index information. To paraphrase this, when minute data is input according to a user operation or a conference control request, if it is determined that conference data of the non-designation application has been displayed, the status identification unit requests the video recording unit to transmit moving image index information.

In response to the request, the video recording unit starts recording a moving image of data displayed by using the non-designation application and transfers index information about the moving image to the status identification unit.

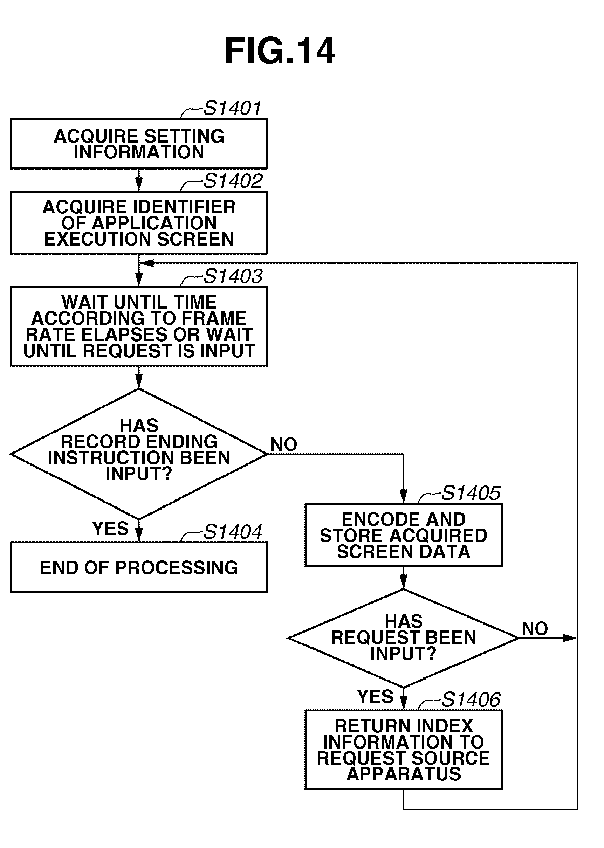

Fig. 14 is a flow chart illustrating exemplary processing executed by the video recording unit. Referring to Fig. 14, in step S1401, the video recording unit acquires setting information (a frame rate, an image size, and a coder-decoder (codec) of the video). More specifically, in step S1401, the video recording unit acquires setting information, such as "15 frames per second (fps)", "320 x 240", and "H.264".

In step S1402, the video recording unit acquires an identifier of an application window to be recorded as a moving image from the identification information for the conference data displayed by the non-designation application. More specifically, the video recording unit according to the present exemplary embodiment acquires an ID of a window displayed by the application as the identifier of the application window.

In step S1403, the video recording unit determines whether a request for transmitting moving image index information has been received from the status identification unit. When a moving image index information transmission request is received, the video recording unit starts recording the moving image of the conference data displayed by the non-designation application.

In step S1403, if the recording of the moving image has already started according to the moving image index information transmission request, the video recording unit determines whether time corresponding to the frame rate has already elapsed. If it is determined that a moving image index information transmission request has been received or that the time corresponding to the frame rate has already elapsed, then the processing advances to step S1405. In step S1405, the video recording unit acquires image data of one frame, encodes the acquired image data into moving image data, and records the coded moving image data.

If it is determined in step S1403 that the recording of the moving image has already started, then the video recording unit determines whether it has been instructed to end the recording of the moving image. More specifically, if an instruction for ending the conference has been input or if the conference data to be displayed by the non-designation application is not displayed yet when next minute data is input, the video recording unit determines that an instruction for ending the recording of the moving image has been instructed.

If it is determined that an instruction for ending the recording of the moving image has been input (Yes in step S1403), then the processing advances to step S1404. In step S1404, the processing ends. Furthermore, if it is determined that a moving image index information transmission request has been received, then the processing advances to step S1406. In step S1406, the video recording unit transmits the moving image index information as a reply to the status identification unit.

As described above, in the present exemplary embodiment, the conference apparatus 401 records a moving image of the conference data displayed by the non-designation application. In addition, if the reference icon on the minute is operated, the conference apparatus 401 displays the conference data by the non-designation application as a moving image.

With the above-described configuration, the present exemplary embodiment enables the person viewing the minute to more correctly recognize and understand the content of the conference even if conference data reproduced by an application which does not allow acquisition of detailed information, such as a target cell or a reference page (i.e., the non-designation application) is referred to.

In the present exemplary embodiment, the reference icon on the recorded minute can be a reference icon of a type different from the type of the reference icon on the recorded minute according to the first exemplary embodiment.

### Other Embodiments

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium). In such a case, the system or apparatus, and the recording medium where the program is stored, are included as being within the scope of the present invention.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A display control apparatus (101) configured to display conference data, the display control apparatus (101) comprising:
an input means for receiving minute data entered by a user during a conference;
an acquisition means for acquiring identification information about the conference data displayed during the conference;
a recording control means for recording the minute data received by the input means and the identification information acquired by the acquisition means in association with each other on a memory; and
a display control means for displaying the minute data and the conference data according to an association between the received minute data and the acquired identification information.

2. A display control apparatus (101) according to claim 1, wherein
the recording control means is configured to record the minute data and the identification information in association with each other on the memory at the time of receipt of the minute data by the input means.

3. A display control apparatus (101) according to claim 1 or claim 2, wherein
the recording control means is configured to record information about a display order-relationship of a plurality of conference data on the memory together with the identification information, and
wherein the display control means is configured to display the conference data according to the information about the display order-relationship.

4. A display control apparatus (101) according to any preceding claim, wherein the recording control means is configured, if the conference data includes a plurality of pages, to record on the memory the identification information including a page number of the conference data displayed by a user.

5. A display control apparatus (101) according to any preceding claim, wherein the recording control means is configured, if the conference data is constituted by a plurality of cells, to record the identification information including a cell designated by a user during the conference from among the plurality of cells within the displayed conference data, on the memory.

6. A display control apparatus (101) according to any preceding claim, further comprising a determination means configured to determine whether the displayed conference data is constituted by a plurality of pages and whether the displayed conference data is conference data displayed by an application that is not compatible with the display control apparatus and from whom a page number of displayed conference data cannot be acquired by the acquisition means, wherein the recording control means is configured, if it is determined by the determination means that the displayed conference data is conference data displayed by such an incompatible application, to record a moving image of the conference data displayed by the application.

7. A control method executed by a display control apparatus (101) configured to display conference data, the control method comprising:
receiving minute data entered by a user during a conference;
acquiring identification information about the conference data displayed during the conference;
executing a recording control for recording the received minute data and the acquired identification information in association with each other on a memory; and
executing a display control for displaying the minute data and the conference data according to an association between the received minute data and the acquired identification information.

8. A method according to claim 7, wherein the minute data and the identification information are recorded in association with each other on the memory at the time of receipt of the minute data.

9. A method according to claim 7 or claim 8, further comprising recording information about a display order-relationship of a plurality of conference data on the memory.

10. A method according to any of claims 7 to 9, further comprising determining whether the displayed conference data is constituted by a plurality of pages and whether the displayed conference data is conference data displayed by an application that is not compatible with the display control apparatus and from whom a page number of displayed conference data cannot be acquired, wherein if it is determined that the displayed conference data is conference data displayed by such an incompatible application, a moving image of the conference data displayed by the application is recorded.

11. A program that, when executed by a display control apparatus, causes the display control apparatus to perform a method according to any of claims 7 to 10.

12. A computer-readable recording medium storing a program according to claim 11.
